**Europäisches Patentamt**

**European Patent Office**

**Office européen des brevets**

(11) Publication number: **0 151 920**
**B1**

(12) **EUROPEAN PATENT SPECIFICATION**

(45) Date of publication of patent specification: **18.01.89**

(21) Application number: **85100038.0**

(22) Date of filing: **02.01.85**

(51) Int. Cl.⁴: **G 21 C 3/06, G 21 C 7/10**

(54) Method of processing a control element to be immersed in coolant of a nuclear reactor.

(30) Priority: **13.01.84 US 570487**

(43) Date of publication of application:
**21.08.85 Bulletin 85/34**

(45) Publication of the grant of the patent:
**18.01.89 Bulletin 89/03**

(84) Designated Contracting States:
**BE DE FR GB IT SE**

(56) References cited:
**FR-A-1 244 632**
**FR-A-2 302 348**
**GB-A-1 168 371**

(73) Proprietor: **WESTINGHOUSE ELECTRIC CORPORATION**
**Westinghouse Building Gateway Center**
**Pittsburgh Pennsylvania 15222 (US)**

(72) Inventor: **Weiss, Albert**
**Varner Road**
**Pittsburgh Pennsylvania 15227 (US)**

(74) Representative: **Patentanwälte Dipl.-Ing. R. Holzer Dipl.-Ing. (FH) W. Gallo**
**Philippine-Welser-Strasse 14**
**D-8900 Augsburg (DE)**

Courier Press, Leamington Spa, England.

## Description

This invention relates to a method of processing an elongate control element to be movably inserted into a guide tube immersed in the coolant of a nuclear reactor, and which control element has a metallic cladding and a stack of pellets disposed therein.

Among the elements immersed in reactor coolant are fuel elements, control elements, and coolant-displacement rods such as employed during start-up of a nuclear-reactor plant and at the beginning of each refueling cycle (typically 18 months) for the purpose of displacing coolant and thereby reducing the moderation of the neutron flux. After the reactor has been in operation for some time (typically 10 months of each cycle), these coolant-displacement rods are withdrawn from the coolant.

Nuclear-reactor elements include stacks of pellets enclosed in a cladding. A fuel element includes a stack of pellets of fissile or fertile materials, such as uranium, plutonium or thorium or certain compounds thereof, enclosed in a cladding. The cladding may consist of a zirconium alloy or of stainless steel. A control element includes pellets of a neutron absorbing material, such as natural boron or boron 10 or their compounds, enclosed in a cladding. A coolant-displacement rod, which herein is also categorized under the heading "element", includes a stack of zirconium-oxide pellets enclosed in a cladding of a zirconium alloy.

It has been found that when a coolant-displacement rod is exposed to high energy neutron-flux, the cladding of zirconium alloy grows or creeps axially while the zirconium oxide pellets therein remain dimensionally stable. This growth of the cladding is permanent and progressive. The cladding does not contract axially when the rod is removed from the flux environment, and the growth increases as the exposure to the flux progresses. The life of a reactor is about 40 years. Over this time interval, an unsupported gap of as much as about 18 cm may develop in the pellet stack, usually at the upper end of the rod. At the given temperature, pressure and flux of the coolant existing in a rector, cladding at the unsupported gap would collapse. Distortion of collapsed cladding would cause jamming of a rod in its guide tube or thimble such as would interfere not only with the axial movement of the rod having the collapsed cladding but also with the movement of the whole associated coolant-displacement-rod assembly. Typically, there are 24 rods in an assembly and interference in their free movement would materially impair the operation of the reactor.

Because of demands imposed during the manufacture of control rods, including coolant-displacement rods, there is a small clearance, typically of from 0.15 to 0.20 mm., between the inner diameter of the cladding and the outer diameter of the pellets. During operation of a nuclear reactor, these rods are exposed not only to neutron flux but also to coolant at a high temperature of typically 315°C and at a high pressure of typically 153 atmospheres. Under these conditions, and with a clearance such as mentioned above present between the cladding and the pellets, it is possible for the cladding to become deformed so as to make non-uniform physical contact with the pellets. If this happens, the non-uniformity deformed cladding is likely to interfere in the free movement of the rods within the reactor.

It is the principal object of the invention to provide a method of rendering clad elements to be used in nuclear reactors essentially immune from an undesirable deformation of the cladding and from a formation of undesirable gaps within the cladding.

Accordingly, the invention resides in a method as defined above, which method comprises the following steps performed prior to use of the control element in a guide tube:

a) heating the cladding of the control element to a temperature sufficient to reduce the yield strength thereof and, while maintaining the cladding at said temperature, radially applying thereto isostatic pressure sufficient to cause collapse of the cladding onto the pellets disposed therein;

b) inspecting the control element for radial symmetry thereof throughout its length; and

c) accepting for use, or rejecting, the control element depending upon whether said radial symmetry is present or absent, respectively.

Thus, the invention provides for the cladding to be precollapsed onto the pellets within the cladding as a final step in making of the element. The pellets within the pre-collapsed cladding are packet tightly, and the cladding physically in contact with the pellets resists axial expansion and the formation of unsupported gaps.

A somewhat similar idea of providing for the cladding of an elongated rod element of a nuclear reactor to be collapsed onto the pellets within the cladding disclosed in FR—A—1 244 632. In that case, it is intended to improve the heat transfer characteristic between the fuel pellets and the cladding of a nuclear fuel rod by making the cladding thin enough to allow itself to be plastically deformed by the pressure of the reactor coolant, when in use, and to be held thereby pressed against the fuel pellets. But there is no teaching as to how to solve a jamming problem, involving control rods which are movable in guide tubes.

In practising the invention, the cladding of the element being processed is heated to an elevated temperature at which its yield strength is substantially reduced. Then, while the cladding is at the elevated temperature pressure is applied to the element to collapse the cladding on the stack of pellets. The pressure is applied isostatically by a gas which envelopes the element. The cladding thus is collapsed uniformly so that the element maintains its radial symmetry. Since the processing of the element in accordance with this invention is the last step in its manufacture, each completed element can be inspected for radial symmetry and non-symmetric elements can be rejected. Thus, reliability in the operation of the numerous elements in a reactor is assured. Preferably, the cladding is heated in an atmosphere still containing just enough oxygen to cause the external surface of the cladding to become beneficially oxidized so as to improve its wear resistance.

A preferred embodiment of the invention will now be described, by way of example, with reference to the accompanying drawings, in which:—

Fig. 1 is a view in side elevation partly in longitudinal section, of a coolant-displacement rod processed in accordance with the invention;

Fig. 2 is a sectional view taken along line II—II of Fig. 1;

Fig. 3 is a view in side elevation, and partly in longitudinal section, of a pellet used in the coolant-displacement rod shown in Fig. 1;

Fig. 4 is a view, in perspective, of apparatus for processing the rod shown in Figs. 1 to 3, with part of the wall thereof broken away for clarity; and

Fig. 5 is an exploded view, in perspective, showing the manner in which cladding is connected to be heated by conduction of electrical current.

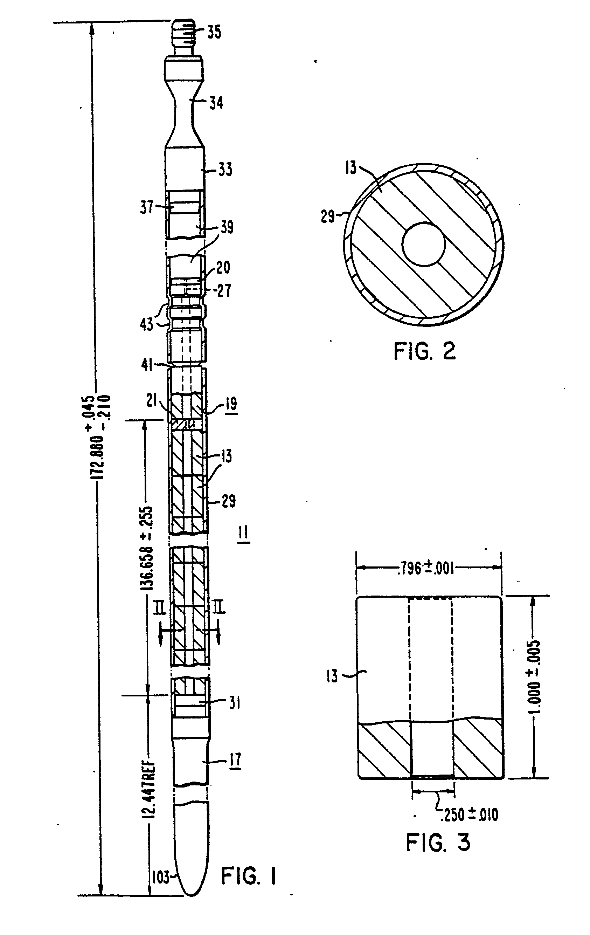

Referring now to the drawings and to Figs. 1 to 3 in particular, the coolant-displacement rod 11 shown therein includes a stack of pellets 13 interposed between a tapered end plug 17 and an intermediate plug 19 terminating in a chamfer 20 at its inner end. When in use, the rod 11 is immersed in coolant, with the end plug 17 directed downward. As used herein, the expression "outer end" means the end towards the end plug 17, and "inner end" means the end away from this end plug.

A spacer 21 is interposed between the mid plug 19 and the innermost pellet 13 of the stack. The pellets 13 are cylindrical and hollow. The end plug 17 is solid, and the mid plug 19 has the form of a hollow cylinder of circular cross-section terminating at its inner end in a central hole 27 of small diameter.

The pellets are enclosed in cladding 29 which extends from a stem 31 at the inner end of the end plug 17 to a position along the mid plug 19. The end plug 17, the mid plug 19, the spacer 21, and the cladding 29 are composed of an alloy the composition of which is predominantly zirconium.

At its outer end, the cladding 29 is welded pressure-tight to a shoulder formed on the end plug 17 by a stem 31; and at its inner end, the cladding is welded pressure-tight to the surface of the mid plug 19. When welding is completed, air is exhausted through hole 27 from the space enclosed by the cladding, and the space is backfilled with an inert gas, such as helium, at about atmospheric pressure. The hole 27 is then sealed pressure-tight by a weld. This precludes any reaction of components of air, such as oxygen and water vapor, with the zirconium alloy on the interior surface of the cladding.

At the end opposite the end plug 17, the rod 11 has a plug 33 having an extension 34 terminating in a threaded stem 35 serving to connect the rod 11 to a rod drive (not shown). The plug 33 has a stem 37 defining a shoulder, and a tube 39 welded to this shoulder extends therefrom to the mid plug 19 where it abuts a weld 41 formed between the cladding 29 and the mid plug 19. The tube 39 is secured to the mid plug 19 by circular swaged joints 43, and is vented. The plug 33 and the tube 39 are composed of stainless steel.

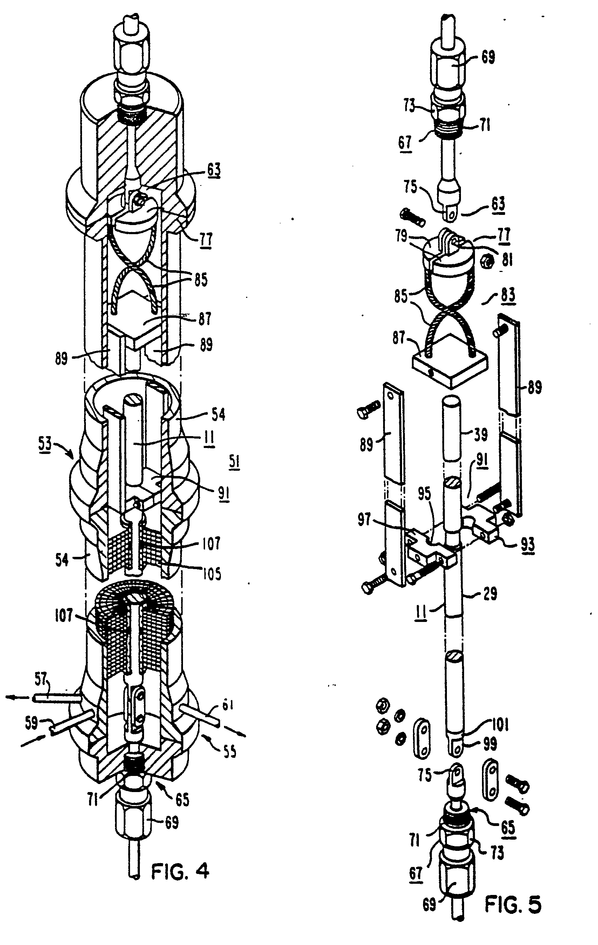

As mentioned hereinbefore, the rod 11, when in use, is immersed in the coolant with its tapered end plug 17 pointing downward, the taper on the end plug facilitating the insertion of the rod into the associated thimble (not shown). The whole rod 11, including the tube 39, is bathed in coolant. Since the tube 39 is vented, coolant fills the tube and there is no differential in pressure across the tube wall. Typically, the pressure of the coolant is about 153 atmospheres. The temperature of the coolant while the reactor is in operation is about 315°C, and there is substantial pressure against the cladding 29. The thermal expansion of the pellets 13 and 15, the cladding 29 and the tube 39 is reversible. The axial expansion of the cladding which results from neutron flux is permanent. Over the life of a reactor in which a rod 11 is installed, the expansion would produce an unsupported gap under the cladding 29 which typically may be as long as 18 cm. Under the pressure of the coolant and at the prevailing temperature, the part of the cladding located over the gap would collapse. In this condition, the cladding might prevent the coolant-displacement assembly from moving axially. In addition, the creep of the cladding would produce non-uniformity in the transverse cross-sectional dimension of the rod 11 along its length. In order to prevent this situation from arising, the rod 11 is processed, in accordance with the illustrated embodiment of the invention, with the apparatus shown in Figs. 4 and 5 and given the general reference numeral 51.

The apparatus 51 includes an elongate pressure vessel 53 formed of hollow cylindrical sections 54 joined by pressure-tight flanges 55, such as marketed under the name GRAY-LOC or equivalents thereof. The tubular sections 54 essentially are pipes made of mild steel. Near its lower end, the apparatus or vessel 51 is provided with an exhaust outlet 57, an inlet 59 for supplying gas to pressurize the vessel, and an outlet 61 for depressurizing the vessel.

The apparatus 51 is provided with upper and lower terminal assemblies 63 and 65, respectively, permitting the apparatus to be connected to an electric current source for a purpose still to be explained.

The upper-terminal assembly 63 includes a feedthrough 67 for producing a pressure-tight joint at the upper end of the vessel 51. The feedthrough 67 includes a hexagonal head 69 connected to a conical threaded member 71 with which a nut 73 meshes. The member 71 engages a thread (not shown) in the upper end of the vessel 51 (Fig. 4) and, when tightened by the nut 73, produces a pressure-tight joint. At its lower end, the feed-through 67 carries an eyelet 75 which is secured to a clevis 77 formed of abutting semicircular plates 79 from each of which an eyelet 81 extends. The eyelet 75 is bolted to the clevis 77. The clevis 77 forms an expansion joint 83 including flexible conductors 85 connected between each plate 79 and a plate 87. The upper-terminal assembly also includes a plurality of strips 89 and a clamping unit 91. The clamping unit 91 includes clamping jaws 93 having semicircular seats 95, dimensioned to engage the cladding 29, and from which flanges 97 extend. When in use, the jaws 93 are abutted and secured together, by means of bolts extending through holes in the flanges 97, so that the seats 95 engaging the upper end of the cladding 29 make good electrical contact therewith. The strips 89 are bolted to the respective jaws 93 at their lower ends, and to the plate 87 at their upper ends. Current is supplied to the cladding through the feed-through 67, the clevis 77, conductors 85, plate 87, strips 89, and clamping unit 91.

The lower-terminal assembly 65 is similar to the upper-terminal assembly 63 except that the lower assembly 65 does not include an expansion joint such as joint 83. Instead, the eyelet 75 is secured to an eyelet 99 extending from a cap 101 mounted on the tapered end 103 (Fig. 1) of the end plug 17 of the coolant-displacement rod 11.

In practicing the invention, the coolant-displacement rod 11 is mounted within the vessel 53 containing a cylindrical body 105 (Fig. 4) of thermal insulation, e.g. mineral wool, through which the rod 11 axially extends and in which it is centered by means of ceramic buttons 107 supported by the thermal insulation 105. Initially, the vessel 53 is exhausted through outlet 57 by means of a "roughing" pump operated typically for about one-half hour. The pressure in the vessel 53 is reduced typically to about between 500 and 1000 microns; i.e. the vessel 53 is substantially evacuated to a level leaving just enough oxygen for oxidation to occur in the outer surface of the cladding when the latter is heated.

Next, current, typically about 200 amperes, is supplied through the terminal assemblies 63 and 65. Since the zirconium oxide pellets 13 are electrical insulators, the current is conducted through the cladding 29 which therefore is heated to about 538°C. At this temperature, the outer surface of the cladding is oxidized by the residual oxygen in the vessel 53 which is just sufficient to accomplish this purpose. With the cladding maintained at about 540°C, an inert gas, typically argon, is admitted through inlet 59 to increase the pressure in the vessel 53 sufficiently, e.g. typically to about 100 to 110 atmospheres, to cause the cladding, the yield strength of which is reduced at the elevated temperature, to collapse onto the pellets 13. Since the pressure is isostatic i.e.,

uniform throughout, the collapse of the cladding likewise occurs uniformly. The gas is then exhausted through outlet 61, the vessel 53 is disassembled, and the processed coolant-displacement rod is removed.

## Claims

1. A method of processing an elongate control element (11) to be movably inserted into a guide tube immersed in the coolant of a nuclear reactor, and which control element (11) has a metallic cladding (29) and a stack of pellets (13) disposed therein,

said method comprising the following steps performed prior to use of the control element in a guide tube:

a) heating the cladding (29) of the control element (11) to a temperature sufficient to reduce the yield strength thereof and, while maintaining the cladding at said temperature, radially applying thereto isostatic pressure sufficient to cause collapse of the cladding onto the pellets (13) disposed therein;

b) inspecting the control element (11) for radial symmetry thereof throughout its length; and

c) accepting for use, or rejecting, the control element (11) depending upon whether said radial symmetry is present or absent, respectively.

2. A method according to claim 1, characterized in that heating of the cladding (29) is carried out in an atmosphere resulting in the formation of an oxide coating on the outer surface of the cladding (29).

3. A method according to claim 1 or 2, characterised in that the cladding (29) is heated by passing an electrical current therethrough.

4. A method according to any of claims 1 to 3, characterized in that said temperature is substantially 540°C, and the isostatic pressure applied at said temperature has substantially a value of from 100 to 110 bars.

5. A method according to any of claims 1 to 4, characterized in that, prior to heating, the elongate control element (11) is introduced into a pressure-tight vessel which thereupon is substantially evacuated to a level leaving enough oxygen in the vessel for oxidation to occur on the outer surface of the cladding (29) during subsequent heating thereof, said vessel thereafter, and with the cladding (29) at said temperature, being pressurized to cause said collapse of the cladding (29).

## Patentansprüche ·

1. Verfahren zur Bearbeitung eines langgestreckten Steuerelements (11), das beweglich in ein in das Kühlmittel eines Kernreaktors eingetauchtes Führungsrohr einzusetzen ist, wobei das Steuerelement (11) eine metallene Hülle (29) und einen darin untergebrachten Tablettenstapel (13) aufweist, mit folgenden vor dem Einsatz des Steuerelements in einem Führungsrohr auszuführenden Schritten:

a) Erwärmen der Hülle (29) des Steuerelements (11) auf eine zur Verringerung von deren Fließfestigkeit ausreichende Temperatur, und radiale Ausübung eines zum Zusammendrücken der Hülle auf die darin befindlichen Tabletten (13) ausreichenden isostatischen Druckes, während die Hülle auf der genannten Temperatur gehalten wird,

b) Prüfen des Steuerelements (11) auf Radialsymmetrie über seine gesamte Länge, und

c) Gebrauchsabnahme oder Zurückweisung des Steuerelements (11), je nachdem, ob Radialsymmetrie gegeben ist ider nicht.

2. Verfahren nach Anspruch 1, dadurch gekennzeichnet, daß das Erwärmen der Hülle (29) in einer Atmosphäre ausgeführt wird, die zur Bildung eines Oxydüberzugs auf der Außenfläche der Hülle (29) führt.

3. Verfahren nach Anspruch 1 oder 2, dadurch gekennzeichnet, daß die Hülle (29) durch hindurchleiten eines elektrisches Stromes erwärmt wird.

4. Verfahren nach einem der Ansprüche 1 bis 3, dadurch gekennzeichnet, daß die genannte Temperatur etwa 540°C beträgt und der bei dieser Temperatur angewandte isostatische Druck etwa im Bereich von 100 bis 110 bar liegt.

5. Verfahren nach einem der Ansprüche 1 bis 4, dadurch gekennzeichnet, daß das langgestreckte Steuerelement (11) vor dem Erwärmen in einen druckdichten Behälter eingeführt wird, der sodann im wesentlichen auf einen Wert evakuiert wird, der noch genügend Sauerstoff für die Oxidation der Außenfläche der Hülle (29) beim anschließenden Erwärmen zurückläßt, und daß der Behälter anschließend bei auf der genannten Temperatur gehaltener Hülle (29) druckbeaufschlagt wird, um das Zusammendrücken der Hülle (29) zu bewirken.

**Revendications**

1. Procédé de traitement d'un élément allongé (11) de commande devant être inséré avec la faculté de se déplacer dans un tube de guidage immergé dans le liquid de refroidissement d'un réacteur nucléaire, cet élément (11) de commande possédant un gainage métallique (29) et un empilement de pastilles (13) disposées à l'intérieur, ledit procédé comportant les opérations suivantes accomplies préalablement à l'utilisation de la barre de commande dans un tube de guidage:

a) chauffer la gainage (29) de l'élément (11) de commande jusqu'à une température suffisante pour diminuer la résistance limite d'élasticité de ce gainage et, tout en maintenant ce gainage à ladite température, lui appliquer dans le sens radial une pression isostatique suffisante pour provoquer l'affaissement du gainage jusque sur les pastilles (13) disposées à l'intérieur;

b) examiner l'élément (11) de commande pour ce qui concerne la symétrie radiale de cette dernière d'un bout à l'autre de sa longueur; et

c) accepter pour utilisation, ou rejeter, l'élément (11) de commande selon que ladite symétrie radiale est présente ou non, respectivement.

2. Procédé selon la revendication 1, caractérisé en ce que le chauffage du gainage (29) est mis en oeuvre dans une atmosphère qui a pour résultat la constitution d'un revêtement d'oxyde sur la surface extérieure du gainage (29).

3. Procédé selon la revendication 1 ou la revendication 2, caractérisé en ce que le gainage (29) est chauffée en faisant passer un courant électrique à travers de dernier.

4. Procédé selon l'une quelconque des revendications 1 à 3, caractérisé en ce que ladite température est pratiquement de 540°C, et la pression isostatique appliquée à ladite température a pratiquement une valeur allant de 100 à 110 bars.

5. Procédé selon l'une quelconque des revendications 1 à 4, caractérisé en ce que, préalablement au chauffage, l'élément allongé (11) de commande est introduit dans une cuve hermétique à la pression qui, cela fait, est sensiblement évacuée jusqu'à un niveau laissant assez d'oxygène dans la cuve pour l'oxydation destinée à survenir sur la surface extérieure du gainage (29) pendant le chauffage ultérieur de ce dernier, ladite cuve après cela, et avec le gainage (29) à ladite température, étant mise en pression de façon à provoquer ledit affaissement du gainage (29).

FIG. 1

FIG. 2

FIG. 3

1

FIG. 4

FIG. 5